# EUROPEAN PATENT SPECIFICATION

(11) **EP 3 284 991 B1**
(45) Date of publication and mention of the grant of the patent: **17.07.2019**
(21) Application number: 17186468.9
(22) Date of filing: 16.08.2017
(51) Int. Cl.: F16L 1/16, F16L 1/24, F16L 55/38, F16L 55/40, B63B 22/06

(54) **METHOD AND SYSTEM FOR RELEASING A SUBMERGIBLE LOAD FROM A BUOYANT MEMBER**
VERFAHREN UND SYSTEM ZUR FREIGABE EINER VERSENKBAREN LAST VON EINEM SCHWIMMFÄHIGEN ELEMENT
PROCÉDÉ ET SYSTÈME PERMETTANT DE LIBÉRER UNE CHARGE SUBMERSIBLE À PARTIR D'UN ÉLÉMENT FLOTTANT

(30) Priority: 18.08.2016 NL 2017332
(43) Date of publication of application: 21.02.2018
(73) Proprietor: Baggermaatschappij Boskalis B.V., 3356 LK Papendrecht (NL)
(72) Inventor: ROELS, Arnoud Gerard Marleen, 3356 LK Papendrecht (NL); LISTER, Guy William, 3356 LK Papendrecht (NL); DE WIT, Willem, 3356 LK Papendrecht (NL); BERJANO LANÇA, João Pedro, 3356 LK Papendrecht (NL)
(74) Representative: Melchior, Robin

(56) References cited:
- EP-A1- 2 039 440
- FR-A- 643 717
- FR-A1- 2 492 281
- GB-A- 2 221 247
- GB-A- 2 281 340
- JP-A- H06 213 372
- US-A- 4 069 535

## Description

### BACKGROUND

The invention relates to a method and a system for releasing a submergible load from a buoyant member.

GB 2 281 340 A discloses a number of clips between strops around supporting buoyancy and strops around a supported pipeline. A lay-flat inflatable tube extends from one clip to another. When the pipeline has been positioned as desired, resting on the sea-bed with the buoyancy remaining partially buoyant, the pneumatic or hydraulic pressure is applied into the lay-flat tube from one end. The nearest clip releases and the pressure builds up in the tube for release of the next clip. Thus all clips should release progressively and quickly.

In practice however, the clips do not fully close the lay-flat tube. Hence, the pressure tends to build up throughout the entire tube. Due to the overall pressure buildup, the release of consecutive clips may occur more rapidly and unpredictably than expected. In some cases, the clips are released almost simultaneously along the entire tube and there may be no way to slow down or stop the release process before the next clip.

It is an object of the present invention to provide a method and a system for releasing a submergible load from a buoyant member, wherein the controllability of the progressive release can be improved.

### SUMMARY OF THE INVENTION

According to a first aspect, the invention provides a method for releasing a submergible load from a buoyant member, wherein the method comprises the steps of:
- coupling the submergible load to the buoyant member with the use of one or more straps retained by one or more releasable clips;
- providing a hose that extends through the one or more releasable clips, wherein each releasable clip comprises a first clip member and a second clip member which are releasably engaged to each other around the hose while leaving an intermediate space for accommodating said hose;
- inserting a plug into the hose in a release direction towards the one or more releasable clips, wherein the plug is dimensioned to fit through the hose in a release direction while the plug is too large to fit through the intermediate space between the engaged clip members;
- exerting a pressure onto the plug in the release direction, thereby driving the plug through the hose in the release direction towards and into contact with one of the one or more releasable clips; and
- exerting the pressure onto the plug in the release direction to force the plug through the intermediate space between the first clip member and the second clip member, thereby releasing or disengaging the first clip member and the second clip member.

In the prior art, a pressurized expansion of the hose is used which causes the simultaneous release of several releasable clips. In the method according to the present invention, a controlled, pressure driven movement of the plug through the hose can cause a controlled, one-by-one release of the releasable clips. In particular, the plug can prevent the pressure from travelling uncontrollably through the hose towards the releasable clips.

In a preferred embodiment the method comprises the step of reducing the pressure or releasing the pressure that is exerted onto the plug to slow down or stop the driving of the plug through the hose. In the absence of a pressure force, the plug will stop moving through the hose and the release process can be interrupted almost instantaneously.

In a further embodiment the method comprises the step of providing the plug with a seal that divides the hose into a first section upstream and a second section downstream of the plug with respect to the release direction, wherein the seal prevents that pressure leaks from the first section to the second section. By sealing the hose, it can be prevented that pressure builds up in the second section, which pressure build up could prematurely release the releasable clips. Moreover, because of the sealing, the release process can be interrupted reliably.

In a further embodiment the plug is provided with a wedge that tapers towards the one releasable clip, wherein the step of forcing the plug through said one releasable clip comprises the step of forcing the wedge between the first clip member and the second clip member in the release direction, thereby effectively wedging open said one releasable clip. The wedge can reduce the amount of pressure required to force the plug through the releasable clip. In particular, the wedge can be shaped so as to effectively convert at least a part of the pressure into a release force acting transversely with respect to the release direction onto the clip members.

Preferably, the pressure for driving the plug through the hose is in the range of 0.5 to 1 bar. The pressure for forcing the plug through the one releasable clip is in the range of 2.0 to 10.0 bar, and preferably in the range of 2.0 to 8.0 bar. The difference in pressure can be observed and/or controlled by an operator to monitor and/or control the release process. The upper limit of 10.0 bar should be sufficient in normal conditions to force the plug through the releasable clip without puncturing the hose.

In a further embodiment the pressure is a hydraulic or a pneumatic pressure. Hydraulic pressure, i.e. water pressure, is preferred because of the non-compressive nature of liquids and because it can be sealed more easily by the plug. However, pneumatic pressure can be just as effective to force the plug through the hose.

In a further embodiment the method further comprises the step of providing reinforcement or buoyancy to the hose upstream of said one releasable clip with respect to the release direction to prevent slacking of the hose. Slacking of the hose can make it harder to force the plug through the releasable clip. In an embodiment thereof the reinforcement or buoyancy is arranged for keeping the hose at an angle within zero to fifty degrees with respect the release direction. At angles greater than fifty degrees, the pressure required to force the plug through the releasable clip increases significantly and may exceed 10.0 bar.

In a practical embodiment the hose has a first end where the plug is inserted and a second end downstream of the first end in the release direction, wherein the method further comprises the step of providing a collection member at or near the second end of the hose for collecting the plug. Hence, it can be prevented that the plug is released uncontrollably at the second end, potentially creating a hazardous situation at the second end. Moreover, the collected plug can be reused for a next cycle of the method.

In an embodiment thereof the method comprises the step of reducing or releasing the pressure in the hose upstream of the collected plug with respect to the release direction. Thus, it can be prevented that the pressure builds up to hazardous levels behind the collected plug.

In a further embodiment the method further comprises the step of providing a lubricant between the plug and the hose to facilitate sliding of said plug within the hose.

In an embodiment thereof the lubricant is applied on the plug prior to insertion. Hence, the plug can carry the lubricant and apply it to the hose as the plug travels through the hose.

According to a second aspect, the invention provides a system for releasing a submergible load from a buoyant member, comprising a buoyant member, one or more releasable clips for coupling the submergible load to the buoyant member and a hose extending through the one or more releasable clips, wherein each releasable clip comprises a first clip member and a second clip member which are arranged to be releasably engaged to each other around the hose while leaving an intermediate space for accommodating said hose, wherein the system further comprises a plug that is insertable into the hose in a release direction towards the one or more releasable clips, wherein the plug is dimensioned to be fit through the hose in the release direction while the plug is too large to fit through the intermediate space between the engaged clip members, wherein the system comprises a pressure source that is connectable to the hose at a first end thereof upstream of the plug with respect to the release direction, wherein the pressure source is arranged for exerting a pressure onto the plug in the release direction to drive the plug through the hose in the release direction towards and into contact with one of the one or more releasable clips and through the intermediate space between the engaged clip members of said one releasable clip, to release said clip members.

In the system according to the present invention, the plug can be controllably driven with pressure through the hose, thereby causing a controlled, one-by-one release of the releasable clips. In particular, the plug can prevent the pressure from travelling uncontrollably through the hose towards the releasable clips.

In a preferred embodiment of the system the pressure source comprises a control member for controlling the pressure of the pressure source. Hence, the pressure can be increased, reduced or released to control the rate of the release.

In a further embodiment of the system the pressure source is a pneumatic or a hydraulic pressure source. Hydraulic pressure, i.e. water pressure, is preferred because of the non-compressive nature of liquids and because it can be sealed more easily by the plug. However, pneumatic pressure can be just as effective to force the plug through the hose.

In a practical embodiment of the system the hose has a second end downstream of the first end in the release direction, wherein the system comprises a collection member for collecting the plug at or near the second end. Hence, it can be prevented that the plug is released uncontrollably at the second end, potentially creating a hazardous situation at the second end. Moreover, the collected plug can be reused for a next cycle of the method.

In an embodiment thereof the hose is provided with one or more perforations which are arranged to be upstream of the collected plug at or near the second end. Thus, pressure can escape through the perforations such that it can be prevented that the pressure builds up to hazardous levels behind the collected plug.

In a further embodiment of the system the hose is provided with a reinforcement element, preferably a rib, for increasing the rigidity of the hose against slacking. Slacking of the hose can make it harder to force the plug through the releasable clip. The reinforcement element can increase the rigidity of the hose against slacking.

In an alternative embodiment of the system the hose is a primary hose, wherein the system further comprises an auxiliary hose that is connected to the primary hose and that is arranged to provide buoyancy and/or stiffness to the primary hose once the primary hose is released from the buoyant member. The buoyancy and/or stiffness can prevent or reduce the amount of the slacking of the hose once it is released from the buoyant member.

In an embodiment the plug has a leading end that is arranged to face in the release direction and a trailing end that is arranged to face opposite to the release direction, wherein the plug is too large to fit through the intermediate space between clip members at or near the leading end. Hence, the part of the plug that comes into the contact with the releasable clip first can already force the clip members to disengage.

In an embodiment thereof the plug is provided with a wedge at the leading end, wherein the wedge is arranged to taper in the release direction. Preferably, the wedge tapers conically. The wedge can reduce the amount of pressure required to force the plug through the releasable clip. In particular, the wedge can be shaped so as to effectively convert at least a part of the pressure into a release force acting transversely with respect to the release direction onto the clip members.

In a further embodiment the plug is provided with a seal that is arranged for closely abutting and/or sealing the hose. Preferably the seal has a circular cross section.

In a further embodiment thereof the seal is provided at or near the trailing end of the plug. Hence, the leading end of the plug can be used to force the release of the releasable clip, while the seal at the trailing end can keep the hose sealed. By sealing the hose, it can be prevented that pressure builds up in the second section, which pressure build up could prematurely release the releasable clips. Moreover, because of the sealing, the release process can be interrupted reliably.

In a further embodiment thereof the largest diameter of the part of the plug downstream of the seal in the release direction is smaller than the largest diameter of the plug at the seal. In particular, the largest diameter of the part of the plug downstream of the seal in the release direction is ninety percent or less, and preferably eighty percent or less, of the largest diameter of the plug at the seal. Hence, said part of the plug may be able to move and/or tilt with respect to the center of the hose to allow some degree of centering of the leading end of the plug relative to the releasable clip.

In a further embodiment the plug has a largest diameter of less than six centimeters, and preferably less than three centimeters. Hence, the plug is able to fit in a correspondingly dimensioned hose.

In one embodiment the plug comprises a plug body, wherein the plug body comprises or forms a lubrication surface for receiving an amount of lubricant to reduce the resistance to sliding of the plug with respect to the hose. Hence, the plug can carry the lubricant and apply it to the hose as the plug travels through the hose.

In an embodiment thereof the lubrication surface is recessed with respect to the adjacent parts of the plug for easy application and/or gradual release of the lubricant into the space between the plug and the hose.

### BRIEF DESCRIPTION OF THE DRAWINGS

The invention will be elucidated on the basis of an exemplary embodiment shown in the attached schematic drawings, in which:
figure 1 shows a side view of a system according to a first embodiment of the invention for releasing a submergible load from a buoyant member during a first step of a method for releasing said submergible load from the buoyant member;
figure 2 shows a detail of the system according to the circle II in figure 1;
figure 3 shows a side view of the system of figure 1 during a second step of the method for releasing said submergible load from the buoyant member;
figure 4 shows a cross section of the system according to the line IV-IV in figure 1;
figure 5 shows a cross section of the system according to the line V-V in figure 2;
figure 6 shows a side view of an alternative system according to a second embodiment of the invention for releasing the submergible load from the buoyant member;
figure 7 shows a side view of a further alternative system according to a third embodiment of the invention for releasing the submergible load from the buoyant member; and
figure 8 shows an optional collecting member for use in combination with the system according to any one of the aforementioned embodiments.

### DETAILED DESCRIPTION OF THE INVENTION

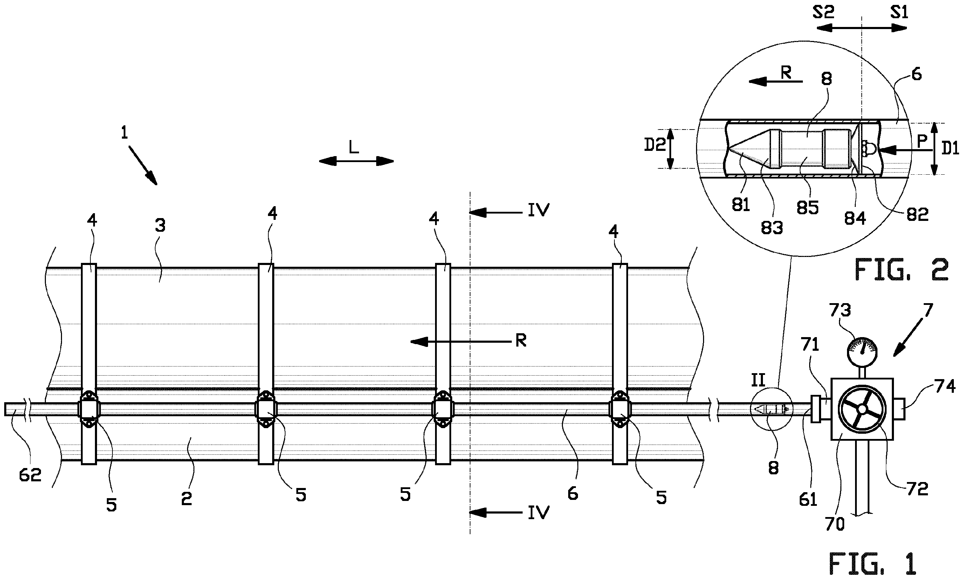

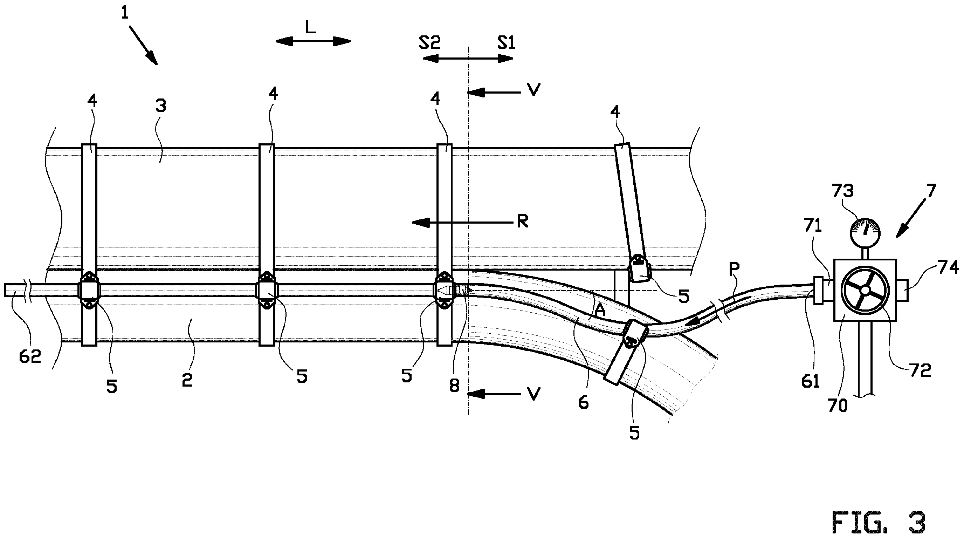

Figures 1 and 3 show a system 1 for releasing a submergible load 2 from a buoyant member 3 according to a first exemplary embodiment of the invention. The submergible load 2 can be a pipeline or a cable for a subsea infrastructure, e.g. a cable for data communication. The buoyant member 3 is formed by an inflatable or air-filled tube 30 with a buoyancy that is sufficient to at least partially support the submergible load 2 at sea. The buoyant member 3 is releasably coupled to the submergible load 2. In the coupled state, the buoyant member 3 has a longitudinal direction L that extends parallel or substantially parallel to the elongate direction of the submergible load 2. Typically, the submergible load 2 and the buoyant member 3 are deployed together from a vessel or the shore. The submergible load 2 is initially positioned above the sea bottom. The load 2 is then dropped onto the sea bottom by terminating the coupling between the buoyant member 3 and the submergible load 2, thereby releasing the submergible load 2 from the buoyant member 3.

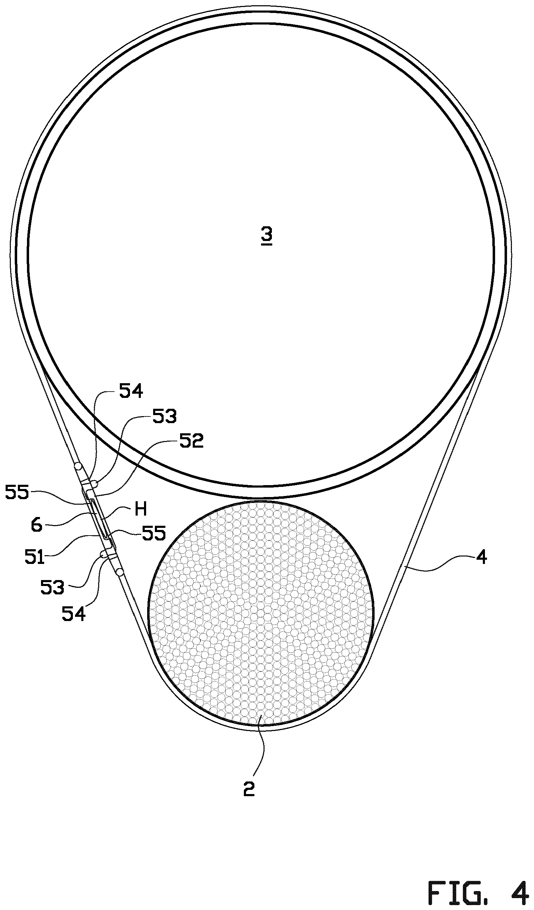

As shown in figure 1, the submergible load 2 is coupled to the buoyant member 3 with a plurality of straps 4. In this exemplary embodiment, as best seen in the cross section of figure 4, each strap 4 is arranged circumferentially and/or in a loop around the combination of the submergible load 2 and buoyant member 3. However, it is noted that different strap configurations, e.g. a configuration in which one or more straps are looped individually around the submergible load 2 and the buoyant member 3, are also feasible. Each strap 4 or a combination of straps is coupled with a releasable clip 5 to retain the buoyant member 3 to the submergible load 2. The submergible load 2 is coupled to the buoyant member 3 at a plurality of consecutive coupling positions, distributed evenly along and/or spaced apart over the length of the buoyant member 3. Typically, the buoyant member 3 is coupled to the submergible load 2 with a spacing of one meter or less.

The release clip 5, which is known per se from GB 2 281 340 A, comprises a first clip member 51 and a second clip member 52. Each clip member 51, 52 is connected to an end of the strap 4. The clip members 51, 52 are arranged to releasably engage each other, thereby closing and/or completing the loop of said strap 4 and/or retaining the strap 4 around the combination of the submergible load 2 and the buoyant member 3.

In this exemplary embodiment, each clip member 51, 52 comprises a hook 53 at one end, an aperture 54 at another end and a reaction surface 55 extending in between both ends. The hook 53 of each clip member 51, 52 releasably snap-fits into the aperture 54 of the other clip member 51, 52. Other configurations of mutually engaging and releasable clip members 51, 52 will be apparent to one skilled in the art and would yet be encompassed by the scope of the present invention. Between the reaction surfaces 55, the release clip 5 defines an intermediate space H from which a release force F can be applied onto the reaction surfaces 55 for releasing and/or disengaging the clip members 51, 52.

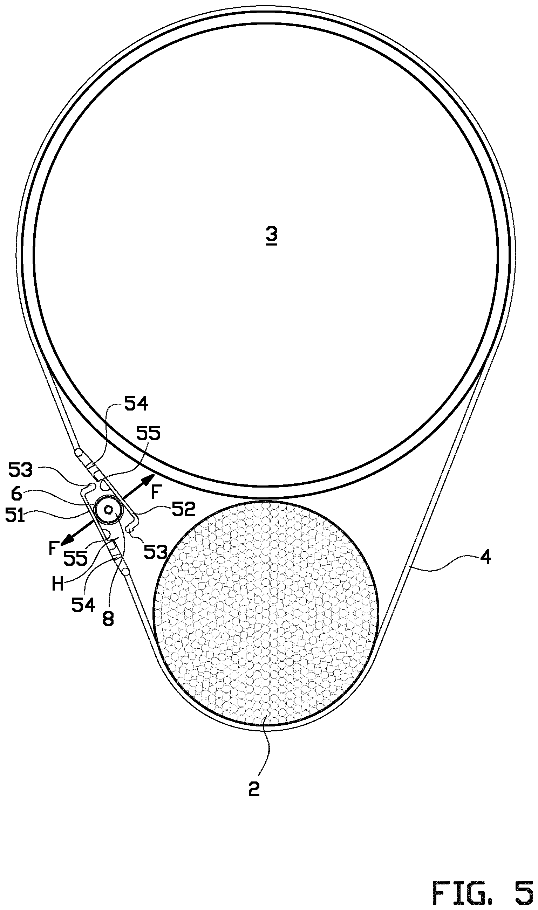

As shown in figure 1, the system 1 further comprises a hose 6 extending in a release direction R alongside, substantially parallel to and/or in the longitudinal direction L of the buoyant member 3. Preferably, the hose 6 is of the lay-flat type, meaning that in a resting state, in which the pressure inside the hose 6 is equal or substantially equal to the ambient pressure, the hose 6 is arranged to lie flat or substantially flat. Said resting state is shown in cross section in figure 4. The hose 6 may be expanded from the resting state into an expanded state, in which the hose 6 has a substantially circular cross section. In the expanded state, as shown in cross section in figure 5, the hose 6 is considerably smaller in diameter than the buoyant member 3 and does not serve to contribute buoyancy to the buoyant member 3. Preferably, the diameter of the hose 6 is equal or less than six centimeters, most preferably equal or less than three centimeters.

As shown in figure 1, the hose 6 has a first end 61 that is connected to a source 7 of pneumatic or hydraulic pressure upstream with respect to the release direction R and a second end 62 that is located downstream of the pressure source 7 in the release direction R. The second end 62 can be a free or distal end. Alternatively, the second end 62 may be attached to a vessel or the shore (not shown). Furthermore, the second end 62 may be an open end or a closed end. The hose 6 is arranged to extend alongside the submergible load 2 and/or the buoyant member 3 in the release direction R from one releasable clip 5 to the next along a plurality of the clips 5. At each releasable clip 5, the hose 6 is inserted, accommodated, enclosed and/or sandwiched between the respective clip members 51, 52 of the releasable clip 5. In its resting state, the hose 6 is arranged to lie flat or substantially flat in between the opposite reaction surfaces 55 of the respective clip members 51, 52 without exerting any substantial forces onto the reaction surfaces 55.

The pressure source 7 comprises a manually controllable pump 70 with an output opening 71 for connection to the first end 61 of the hose 6, a control member 72 for controlling the pressure of the pump 70 through the output opening 71, a flow meter, a pressure sensor or a pressure gauge 73 and a pressure release opening 74 for releasing the pressure inside the hose 6. The pump 70 is preferably connected to a source of hydraulic fluid, most preferably water. Alternatively, the pump 70 may be arranged to provide pneumatic pressure by drawing air from the environment.

As shown in detail in figure 2, the system 1 according to the invention further comprises a pig or a plug 8 that is insertable into the hose 6 at the first end 61 and that is dimensioned to travel inside and/or through the hose 6 in the release direction R towards the second end 62. To insert the plug 8 into the hose 6 at the first end 61, the first end 61 can be temporarily disconnected from the output opening 71 of the pump 70. The plug 8 has a substantially circular cross section with a largest diameter D1 that is equal, substantially equal or slightly smaller than the inside diameter of the hose 6. Preferably, the largest diameter D1 of the plug 8 is equal to or less than six centimeters and most preferably equal to or less than three centimeters.

The plug 8 has a leading end 81 that is arranged to face in the release direction R and a trailing end 82 that is arranged to face opposite to the release direction R. At the leading end 81, the plug 8 is provided with a wedge 83 that tapers in the release direction R and that is arranged to be driven into the space H between the first clip member 51 and the second clip member 52. Preferably, the wedge 83 is conically shaped. The largest diameter D2 of the wedge 83 is larger than the intermediate space H between the first clip member 51 and the second clip member 52 so that the wedge 83 can only forcefully pass through or in between the clip members 51, 52 when said clip members 51, 52 while exerting release forces F onto the reaction surface 55 thereof. At the trailing end 82, the plug 8 is provided with a seal 84 that is arranged to closely abut and/or seal the hose 6. In particular, the seal 84 has a circular cross section that is arranged to seal the hose 6 at the location of the plug 8 in a substantially fluid-tight and/or air-tight manner. Preferably, the seal 84 forms the largest diameter D1 of the plug 8. As such, the hose 6 is divided at the seal 84 into a first section S1 upstream and a second section S2 downstream of the plug 8 with respect to the release direction R.

As can be seen in figure 2, the part of the plug 8 upstream of the seal 84 with respect to the release direction R, and in particular the wedge 83, has a smaller largest diameter D2 than the largest diameter D1 of the plug 8 at the seal 84. In this exemplary embodiment, the diameter D2 of the wedge 83 is approximately eighty percent of the diameter D1 of the seal 84. Hence, the part of the plug 8 upstream of the seal 84 has some freedom of movement within the hose 6 and may be tilted slightly within the hose 8 with respect to the center of the hose 6. This freedom of movement allows the wedge 83 to automatically align and/or self-center with respect to the intermediate space H between the reaction surfaces 55 of the clip members 51, 52, rather than the center of the hose 6.

The plug 8 comprises a plug body 80 extending between the leading end 81 and the trailing end 82, and more in particular between the wedge 83 and the seal 84. In this exemplary embodiment, the plug body 80 is integrally formed or formed as a single piece with the wedge 83. The seal 84 is a separate member that is attached to the plug body 80 at the trailing end 82. Alternatively, the seal 84 may also be integrally formed as a single piece with the plug body 80. The plug body 80, comprises or forms a lubrication surface 85 for receiving an amount of lubricant, in particular grease, to reduce the resistance to sliding of the plug 8 with respect to the hose 6. Said lubrication surface 85 is preferably recessed with respect to the adjacent parts of the plug 8 for easy application and/or gradual release of the lubricant into the space between the plug 8 and the hose 6.

A method for releasing the submergible load 2 from the buoyant member 3 with the use of the aforementioned system 1 will be described hereafter with reference to figures 1-5.

Figures 1 and 4 show the situation in which the submergible load 2 is coupled to the buoyant member 3 with the use of a plurality of the straps 4 looped around the combination of the submergible load 2 and the buoyant member 3. The straps 4 are held or retained by a plurality of the previously discussed releasable clips 5. Before bringing together of the clip members 51, 52 of each releasable clip 5, the hose 6 is interposed and/or positioned in the intermediate space H between the reaction surfaces 55 of the respective clip members 51, 52. As best seen in figure 4, after the clip members 51, 52 have been engaged, the hose 6 is inserted, accommodated, enclosed and/or sandwiched in the intermediate space H between respective clip members 51, 52. The hose 6 lies substantially flat between the opposing reaction surfaces 55.

As best seen in figures 1 and 2, the plug 8 is inserted into the hose 6 at or near the first end 61 thereof, e.g. by temporarily removing said first end 61 from the output opening 71 of the pressure source 7. The plug 8 is inserted into the hose 6 with its leading end 81 facing in the release direction R. With the first end 61 reconnected, the control member 72 of the pressure source 7 can now be operated to increase the pressure P in the first section S1 of the hose 6 upstream of the plug 8.

Figures 2 and 5 shows the situation in which the pressure P has been increased to an extent in which the plug 8 has started to travel through the hose 6. The plug 8 has already passed and released the first of the releasable clips 5. The first clip member 51 and the second clip member 52 of said released clip 5 have been disengaged, resulting in the ends of the strap 4 being disconnected. The submergible load 2 becomes separated from the buoyant member 3 at the location of said released clip 5 and starts to sink under the influence of its own weight. The hose 6 is pulled downwards slightly and now extends under an angle A with respect to the release direction R.

As shown in figure 2, the plug 8 has moved beyond the released clip 5 and is now in abutment with the next releasable clip 5 in the release direction R. The steps of releasing the releasable clips 5 will be described in more detail hereafter with respect to this next releasable clip 5. In particular, one may observe that the intermediate space H between the clip members 51, 52 of each clip 5 is very narrow, e.g. less than one centimeter wide. The plug 8 has a largest diameter D2 at the wedge 83 that is considerably larger, e.g. in the range of two to five centimeters, than the intermediate space H. Hence, the plug 8, and in particular its wedge 83, is too large to fit through the intermediate space H defined by the engaged clip members 51, 52. Once, the plug 8 is in abutment with one of the releasable clips 5, the pressure P starts to build. The pressure P is deflected by the wedge 8 onto the reaction surfaces 55 of the respective clip members 51, 52 in the form of oppositely directed release forces F. Quickly, the pressure P will reach a threshold at which the plug 8 is forcefully forced through the intermediate space H between the respective clip members 51, 52. The release forces F are sufficient to terminate the snap-fit between the hooks 53 and apertures 54 and consequently disengage and/or release the clip members 51, 52. This in effect causes the release of the respective releasable clip 5.

After the releasable clip 5 has been released, the plug 8 is free to travel through the hose 6 towards and into abutment with the next releasable clip 5, after which the steps of the method above are repeated. In this manner, the plurality of releasable clips 5 can be released progressively and the submergible load 2 can be released and submerged successfully in a controlled manner.

The aforementioned method may be completed at a steady rate. However, there may be situations in which there is a need to adjust and/or control the release. The release may need to be interrupted temporarily or permanently as soon as possible in unexpected or hazardous situations. Contrary to the prior art in which the releasable clips are released simultaneously by inflation of the hose along its entire length, the plug 8 in the system 1 according to the invention can release the releasable clips 5 progressively and in a controlled manner. In particular, it is no longer a pressurized expansion of the entire length of the hose 6 that causes the almost instantaneous release of several releasable clips 5. Instead, the pressure P is merely used to advance the plug 8 into abutment with one of the releasable clips 5. The wedge 83 of the plug 8 is arranged to reliably wedge open said one releasable clip 5 while the seal 84 simultaneously prevents that the pressure in the hose 6 upstream of the plug 8 with respect to the release direction R leaks into the part of the hose 6 downstream of the plug 8 in the release direction R. Hence, the release can be interrupted instantly and uncontrolled release of the releasable clips 5 downstream of the already released clips 5 can be prevented.

Tests by the Applicant have revealed that a pressure P in the range of 0.5 bar to 1.0 bar is required behind the seal 84 of the plug 8 to make the plug 8 travel through the hose 6 towards one of the releasable clips 5. When the wedge 83 of the plug 8 reaches said one release clip 5, the pressure increases and a pressure in a range of 2.0 to 6.0 bar, and in extreme cases up to 8.0 bar or even 10.0 bar, is required to force the wedge 83 through said one releasable clip 5. Within the aforementioned ranges, the plug 8 was observed travelling at an average speed in the range of two to four meters per second through the hose 6. Hence, with a spacing of one meter between each release clip 5, the plug 8 is capable of releasing between approximately two to four releasable clips 5 per second.

It was found that the amount of pressure required to drive the wedge 83 through the releasable clips 5 depends on the angle of hose 6 with respect to the releasable clips 5. In practice, when several releasable clips 5 upstream of an unreleased releasable clip 5 have already been released, the positioning of the hose 6 with respect to the buoyant member 3 upstream of the unreleased releasable clip 5 becomes undefined. In particular, the hose 6 tends to either slack downwards or float upwards. An angle A of the hose 6 with respect to the release direction R is acceptable in a range up to approximately fifty degrees. When the angle approaches or exceeds sixty degrees, the wedge 83 of the plug 8 may bite into the wall of the hose 6. In extreme cases, the plug 8 may even puncture the hose 6.

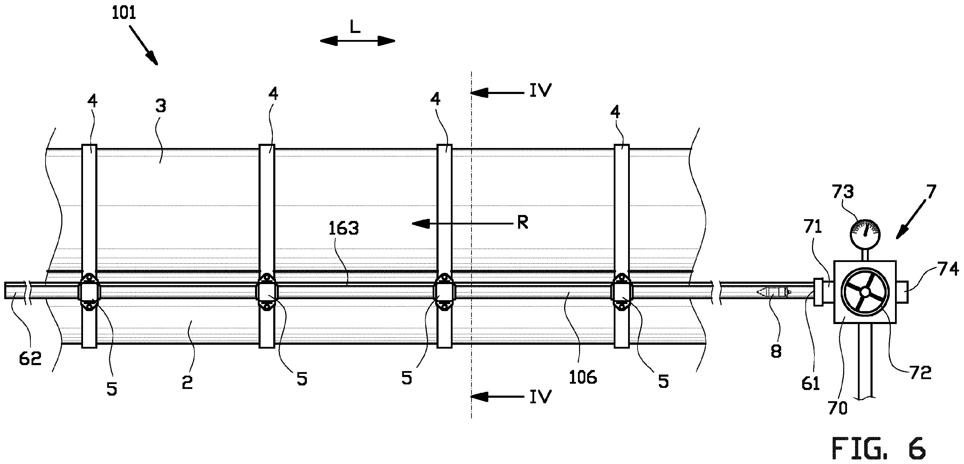

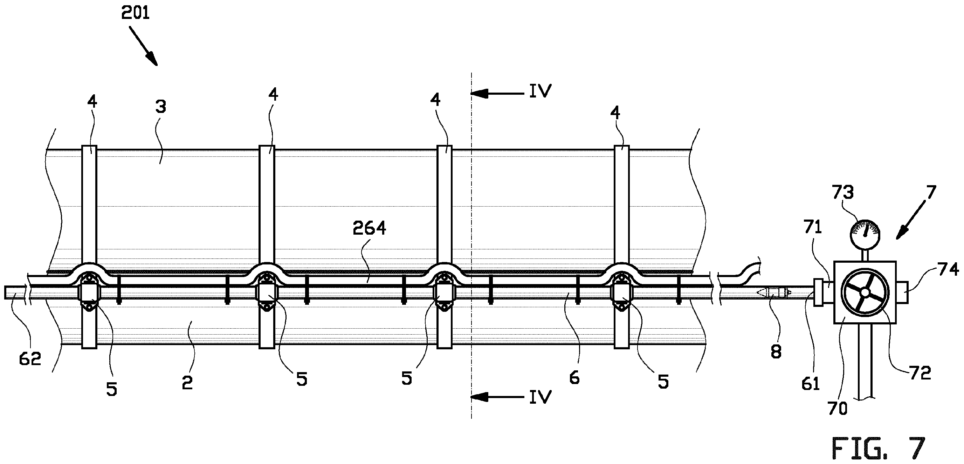

Figures 6 and 7 show alternative embodiments of the system 101, 201 that aim to improve the positioning of the hose 6 with respect to the releasable clips 5 and/or to reduce the slacking of the hose 6.

Figure 6 shows an alternative system 101 according to a second embodiment of the invention, which differs from the previously discussed system 1 in that the hose 106 is provided with one or more reinforcement elements 163 for increasing the rigidity of the hose 106 against slacking. In this exemplary embodiment, the reinforcement element 163 is formed by a rib 164 extending on the outside of the hose 6 in the longitudinal direction of said hose 6.

Figure 7 shows a further alternative system 201 according to a second embodiment of the invention, which differs from the previously discussed systems 1, 101 in that - in addition to the hose 6 being the primary hose 6 - the system 201 comprises an auxiliary hose 264 that is connected to the primary hose 6 and that provides buoyancy and/or stiffness to the primary hose 6 once the primary hose 6 is released from the buoyant member 3. By providing additional buoyancy and/or stiffness, slacking of the primary hose 6 can be prevented.

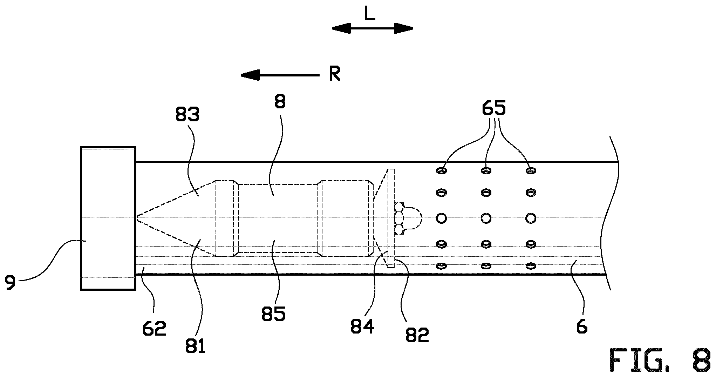

Figure 8 shows an optional collection member 9 that can be applied to the systems 1, 101, 201 according to any of the previously discussed embodiments of the invention. The collection member 9 is arranged to be placed at and/or mounted to the second end 62 of the hose 6 to collect the plug 8 once it reaches said second end 62. The collection member 9 can be formed by a capping element 91 that closes off the second end 62 of the hose 6. To prevent an uncontrolled buildup of pressure behind the collected plug 8, the hose 6 can be provided with perforations 65 upstream of the collected plug 8 at or near the second end 62, to allow the pressure to escape from the hose 6. Alternatively, the collection member 9 can be formed by a suitable container (not shown), e.g. a bag, a basket or a cage.

In an optional embodiment, the flow meter, the pressure sensor and/or the pressure gauge 73 may be used in combination with a control unit (not shown - representable by a schematic box that is electronically connected to the flow meter, the pressure sensor and/or the pressure gauge 73) to control the pressure and/or the flow of the pneumatic or hydraulic medium, so as to accurately control the speed and/or position of the plug 8 in the hose 6. For example, the flow rate of the medium can be measured and used to control the speed of the plug 8 and/or based on the volume that is supplied into the hose 6 over time, one can calculate the position of the plug 8 along the length of the hose 6, provided that there is no or minimal leaking at the plug 8 and assuming that the hose 6 does not stretch.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

## Claims

1. Method for releasing a submergible load (2) from a buoyant member (3), wherein the method comprises the steps of:
- coupling the submergible load (2) to the buoyant member (3) with the use of one or more straps (4) retained by one or more releasable clips (5);
- providing a hose (6) that extends through the one or more releasable clips (5), wherein each releasable clip (5) comprises a first clip member (51) and a second clip member (52) which are releasably engaged to each other around the hose (6) while leaving an intermediate space (H) for accommodating said hose (6);
- inserting a plug (8) into the hose (6) in a release direction (R) towards the one or more releasable clips (5), wherein the plug (8) is dimensioned to fit through the hose (6) in the release direction (R) while the plug (8) is too large to fit through the intermediate space (H) between the engaged clip members (51, 52);
- exerting a pressure (P) onto the plug (8) in the release direction (R), thereby driving the plug (8) through the hose (6) in the release direction (R) towards and into contact with one of the one or more releasable clips (5); and
- exerting the pressure (P) onto the plug (8) in the release direction (R) to force the plug (8) through the intermediate space (H) between the first clip member (51) and the second clip member (52), thereby releasing the first clip member (51) and the second clip member (52).

2. Method according to claim 1, wherein the method comprises the step of reducing the pressure or releasing the pressure that is exerted onto the plug to slow down or stop the driving of the plug through the hose.

3. Method according to claim 1 or 2, wherein the method comprises the step of providing the plug with a seal that divides the hose into a first section upstream and a second section downstream of the plug with respect to the release direction, wherein the seal prevents that pressure leaks from the first section to the second section.

4. Method according to any one of the preceding claims, wherein the plug is provided with a wedge that tapers towards the one releasable clip, wherein the step of forcing the plug through said one releasable clip comprises the step of forcing the wedge between the first clip member and the second clip member in the release direction, thereby wedging open said one releasable clip.

5. Method according to any one of the preceding claims, wherein the pressure for driving the plug through the hose is in the range of 0.5 to 1 bar and/or wherein the pressure for forcing the plug through the one releasable clip is in the range of 2.0 to 10.0 bar, and preferably in the range of 2.0 to 8.0 bar.

6. Method according to any one of the preceding claims, wherein the pressure is a hydraulic or a pneumatic pressure.

7. Method according to any one of the preceding claims, wherein the method further comprises the step of providing reinforcement or buoyancy to the hose upstream of said one releasable clip with respect to the release direction to prevent slacking of the hose, preferably wherein the reinforcement or buoyancy is arranged for keeping the hose at an angle within zero to fifty degrees with respect the release direction.

8. Method according to any one of the preceding claims, wherein the hose has a first end where the plug is inserted and a second end downstream of the first end in the release direction, wherein the method further comprises the step of providing a collection member at or near the second end of the hose for collecting the plug, preferably wherein the method comprises the step of reducing or releasing the pressure in the hose upstream of the collected plug with respect to the release direction.

9. Method according to any one of the preceding claims, wherein the method further comprises the step of providing a lubricant between the plug and the hose to facilitate sliding of said plug within the hose, preferably wherein the lubricant is applied on the plug prior to insertion.

10. System (1) for releasing a submergible load (2) from a buoyant member (3), comprising a buoyant member (3), one or more releasable clips (5) for coupling the submergible load (2) to the buoyant member (3) and a hose (6) extending through the one or more releasable clips (5), wherein each releasable clip (5) comprises a first clip member (51) and a second clip member (52) which are arranged to be releasably engaged to each other around the hose (6) while leaving an intermediate space (H) for accommodating said hose (6), wherein the system (1) further comprises a plug (8) that is insertable into the hose (6) in a release direction (R) towards the one or more releasable clips (5), wherein the plug (8) is dimensioned to fit through the hose (5) in the release direction (R) while the plug (8) is too large to fit through the intermediate space (H) between the engaged clip members (51, 52), wherein the system (1) comprises a pressure source (7), in particular a pneumatic or hydraulic pressure source, that is connectable to the hose (6) at a first end (61) thereof upstream of the plug (8) with respect to the release direction (R), wherein the pressure source (7) is arranged for exerting a pressure (P) onto the plug (8) in the release direction (R) to drive the plug (8) through the hose (6) in the release direction (R) towards and into contact with one of the one or more releasable clips (5) and through the intermediate space (H) between the engaged clip members (51, 52) of said one releasable clip (5), to release said clip members (51, 52).

11. System according to claim 10, wherein the pressure source comprises a control member for controlling the pressure of the pressure source.

12. System according to claim 10 or 11, wherein the hose has a second end downstream of the first end in the release direction, wherein the system comprises a collection member for collecting the plug at or near the second end, preferably wherein the hose is provided with one or more perforations which are arranged to be upstream of the collected plug at or near the second end.

13. System according to any one of claims 10-12,
wherein the hose is provided with a reinforcement element, preferably a rib, for increasing the rigidity of the hose against slacking;
or;
wherein the hose is a primary hose, wherein the system further comprises an auxiliary hose that is connected to the primary hose and that is arranged to provide buoyancy and/or stiffness to the primary hose once the primary hose is released from the buoyant member.

14. System according to any one of claims 10-13, wherein the plug has a leading end that is arranged to face in the release direction and a trailing end that is arranged to face opposite to the release direction, wherein the plug is too large to fit through the intermediate space between clip members at or near the leading end, wherein the plug is provided with a wedge at the leading end, wherein the plug is provided with a seal at or near the trailing end of the plug that is arranged for closely abutting and/or sealing the hose.

15. System according to any one of claims 10-14, wherein the plug comprises a plug body, wherein the plug body comprises or forms a lubrication surface for receiving an amount of lubricant to reduce the resistance to sliding of the plug with respect to the hose, preferably wherein the lubrication surface is recessed with respect to the adjacent parts of the plug.

## Patentansprüche

1. Verfahren zum Lösen einer versenkbaren Last (2) von einem schwimmfähigen Element (3), wobei das Verfahren die Schritte umfasst:
- Verbinden der versenkbaren Last (2) mit dem schwimmfähigen Element (3) unter Verwendung einer oder mehrerer Riemen (4), die von einer oder mehreren lösbaren Schellen (5) gehalten werden,
- Vorsehen eines Schlauches (6), der sich durch die eine oder mehreren lösbaren Schellen (5) erstreckt, wobei jede lösbare Schelle (5) ein erstes Schellenbauteil (51) und ein zweites Schellenbauteil (52) aufweist, die lösbar miteinander um den Schlauch (6) herum in Eingriff stehen und dabei einen Zwischenraum (H) zur Aufnahme des Schlauches (6) frei lassen,
- Einführen eines Pfropfens (8) in den Schlauch (6) in einer Löserichtung (R) in Richtung auf die eine oder mehreren lösbaren Schellen (5), wobei der Pfropfen (8) dazu dimensioniert ist, in der Löserichtung (R) durch den Schlauch (6) zu passen, wobei der Pfropfen (8) gleichzeitig zu groß dafür ist, durch den Zwischenraum (H) zwischen den in Eingriff stehenden Schellenbauteilen (51, 52) zu passen,
- Ausüben eines Drucks (P) auf den Pfropfen (8) in der Löserichtung (R), wodurch der Pfropfen (8) in der Löserichtung (R) durch den Schlauch (6) in Richtung auf und in Kontakt mit einer der einen oder mehreren lösbaren Schellen (5) getrieben wird, und
- Ausüben des Drucks (P) auf den Pfropfen (8) in der Löserichtung (R), um den Pfropfen (8) durch den Zwischenraum (H) zwischen dem ersten Schellenbauteil (51) und dem zweiten Schellenbauteil (52) zu zwängen, wodurch das erste Schellenbauteil (51) und das zweite Schellenbauteil (52) gelöst werden.

2. Verfahren nach Anspruch 1, wobei das Verfahren den Schritt des Verringerns des Drucks oder Aufheben des Drucks umfasst, der auf den Pfropfen ausgeübt wird, um das Treiben des Pfropfens durch den Schlauch zu verlangsamen oder anzuhalten.

3. Verfahren nach Anspruch 1 oder 2, wobei das Verfahren den Schritt des Vorsehens des Pfropfens mit einer Dichtung umfasst, welche den Schlauch bezüglich der Löserichtung in einen ersten Abschnitt stromaufwärts und einen zweiten Abschnitt stromabwärts des Pfropfens unterteilt, wobei die Dichtung verhindert, dass Druck aus dem ersten Abschnitt in den zweiten Abschnitt leckt.

4. Verfahren nach einem der vorhergehenden Ansprüche, wobei der Pfropfen mit einem Keil versehen ist, der sich zu der einen lösbaren Schelle hin verjüngt, wobei der Schritt des Zwängens des Pfropfens durch die eine lösbare Schelle den Schritt des Zwängens des Keils zwischen das erste Schellenbauteil und das zweite Schellenbauteil in der Löserichtung umfasst, wodurch die eine lösbare Schelle aufgekeilt wird.

5. Verfahren nach einem der vorhergehenden Ansprüche, wobei der Druck zum Treiben des Pfropfens durch den Schlauch im Bereich von 0,5 bis 1 bar liegt und/oder wobei der Druck zum Zwängen des Pfropfens durch die eine lösbare Schelle im Bereich von 2,0 bis 10,0 bar liegt, und vorzugsweise im Bereich von 2,0 bis 8,0 bar.

6. Verfahren nach einem der vorhergehenden Ansprüche, wobei der Druck ein hydraulischer oder ein pneumatischer Druck ist.

7. Verfahren nach einem der vorhergehenden Ansprüche, wobei das Verfahren ferner den Schritt des Vorsehens einer Versteifung oder Schwimmfähigkeit des Schlauchs stromaufwärts der einen lösbaren Schelle bezüglich der Löserichtung umfasst, um ein Durchhängen des Schlauchs zu verhindern, wobei vorzugsweise die Versteifung oder Schwimmfähigkeit dazu ausgeführt ist, den Schlauch in einem Winkel zwischen 0 bis 15° bezüglich der Löserichtung zu halten.

8. Verfahren nach einem der vorhergehenden Ansprüche, wobei der Schlauch ein erstes Ende hat, an dem der Pfropfen eingeführt wird, und ein zweites Ende stromabwärts des ersten Endes in der Löserichtung, wobei das Verfahren ferner den Schritt des Vorsehens eines Sammelbauteils am oder nahe dem zweiten Ende des Schlauchs zum Einsammeln des Pfropfens umfasst, wobei vorzugsweise das Verfahren den Schritt des Verringerns oder Aufhebens des Drucks in dem Schlauch stromaufwärts des eingesammelten Pfropfens bezüglich der Löserichtung umfasst.

9. Verfahren nach einem der vorhergehenden Ansprüche, wobei das Verfahren ferner den Schritt des Vorsehens eines Schmiermittels zwischen dem Pfropfen und dem Schlauch umfasst, um ein Gleiten des Pfropfens in dem Schlauch zu erleichtern, wobei vorzugsweise das Schmiermittel vor einem Einsetzen auf den Pfropfen aufgebracht wird.

10. System (1) zum Lösen einer versenkbaren Last (2) von einem schwimmfähigen Element (3), aufweisend ein schwimmfähiges Element (3), eine oder mehrere lösbare Schellen (5) zum Verbinden der versenkbaren Last (2) mit dem schwimmfähigen Element (3) und einen sich durch die eine oder mehreren lösbaren Schellen (5) erstreckenden Schlauch (6), wobei jede lösbare Schelle (5) ein erstes Schellenbauteil (51) und ein zweites Schellenbauteil (52) umfasst, welche dazu angeordnet sind, lösbar miteinander um den Schlauch (6) herum in Eingriff zu sein und zugleich einen Zwischenraum (H) zur Aufnahme des Schlauchs (6) frei zu lassen, wobei das System (1) ferner einen Pfropfen (8) aufweist, der in einer Löserichtung (R) in Richtung auf die eine oder mehreren lösbaren Schellen (5) in den Schlauch (6) einführbar ist, wobei der Pfropfen (8) dazu dimensioniert ist, in der Löserichtung (R) durch den Schlauch (6) zu passen, während der Pfropfen (8) zu groß ist, um durch den Zwischenraum (H) zwischen den in Eingriff befindlichen Schellenbauteilen (51, 52) zu passen, wobei das System (1) eine Druckquelle (7) aufweist, insbesondere eine pneumatische oder hydraulische Druckquelle, die mit dem Schlauch (6) an einem ersten Ende (61) desselben stromaufwärts des Pfropfens (8) bezüglich der Löserichtung (R) verbindbar ist, wobei die Druckquelle (7) zum Ausüben eines Drucks (P) auf den Pfropfen (8) in der Löserichtung (R) angeordnet ist, um den Pfropfen (8) in der Löserichtung (R) durch den Schlauch (6) in Richtung auf und in Kontakt mit einer der einen oder mehreren lösbaren Schellen (5) und durch den Zwischenraum (H) zwischen den in Eingriff befindlichen Schellenbauteilen (51, 52) der einen lösbaren Schelle (5) zu treiben, um die Schellenbauteile (51, 52) zu lösen.

11. System nach Anspruch 10, wobei die Druckquelle ein Steuerbauteil zum Steuern des Drucks der Druckquelle aufweist.

12. System nach Anspruch 10 oder 11, wobei der Schlauch ein zweites Ende stromabwärts des ersten Endes in der Löserichtung hat, wobei das System ein Sammelbauteil zum Einsammeln des Pfropfens am oder nahe dem zweiten Ende aufweist, wobei vorzugsweise der Schlauch mit einer oder mehreren Perforationen versehen ist, die dazu angeordnet sind, sich stromaufwärts des eingesammelten Pfropfens am oder nahe dem zweiten Ende zu befinden.

13. System nach einem der Ansprüche 10 bis 12, wobei der Schlauch mit einem Versteifungselement, vorzugsweise einer Rippe, versehen ist, um die Steifheit des Schlauchs gegen Durchhängen zu erhöhen,
oder
wobei der Schlauch ein Primärschlauch ist, wobei das System ferner einen Sekundärschlauch aufweist, der mit dem Primärschlauch verbunden ist und der dazu angeordnet ist, dem Primärschlauch Schwimmfähigkeit und/oder Steifheit zu verleihen, sobald der Primärschlauch von dem schwimmfähigen Element gelöst ist.

14. System nach einem der Ansprüche 10 bis 13, wobei der Pfropfen ein vorderes Ende hat, welches dazu angeordnet ist, in die Löserichtung gewandt zu sein, und ein hinteres Ende, das dazu angeordnet ist, der Löserichtung entgegengesetzt gewandt zu sein, wobei der Pfropfen am oder nahe dem vorderen Ende zu groß ist, um durch den Zwischenraum zwischen Schellenbauteilen zu passen, wobei der Pfropfen am vorderen Ende mit einem Keil versehen ist, wobei der Pfropfen am oder nahe dem hinteren Ende des Pfropfens mit einer Dichtung versehen ist, die dazu angeordnet ist, genau an den Schlauch anzugrenzen und/oder ihn abzudichten.

15. System nach einem der Ansprüche 10 bis 14, wobei der Pfropfen einen Pfropfenkörper umfasst, wobei der Pfropfenkörper eine Schmierfläche zur Aufnahme einer Schmiermittelmenge aufweist oder bildet, um den Widerstand gegen ein Gleiten des Pfropfens bezüglich des Schlauchs zu verringern, wobei vorzugsweise die Schmiermittelfläche bezüglich angrenzender Teile des Pfropfens vertieft ist.

## Revendications

1. Procédé pour libérer une charge submersible (2) d'un élément flottant (3), dans lequel le procédé comprend les étapes suivantes :
coupler la charge submersible (2) à l'élément flottant (3) à l'aide d'une ou de plusieurs ceintures (4) retenues par une ou plusieurs attaches amovibles (5) ;
prévoir un tuyau flexible (6) qui s'étend à travers les une ou plusieurs attaches amovibles (5), dans lequel chaque attache amovible (5) comprend un premier élément d'attache (51) et un second élément d'attache (52) qui sont mis en prise de manière amovible entre eux autour du tuyau flexible (6) tout en laissant un espace intermédiaire (H) afin de loger ledit tuyau flexible (6) ;
insérer un bouchon (8) dans le tuyau flexible (6) dans une direction de libération (R) vers une ou plusieurs attaches amovibles (5), dans lequel le bouchon (8) est dimensionné pour s'adapter dans le tuyau flexible (6) dans la direction de libération (R) alors que le bouchon (8) est trop grand pour s'adapter dans l'espace intermédiaire (H) entre les éléments d'attache (51, 52) mis en prise ;
exercer une pression (P) sur le bouchon (8) dans la direction de libération (R), entraînant ainsi le bouchon (8) dans le tuyau flexible (6) dans la direction de libération (R) vers et en contact avec une ou plusieurs attaches amovibles (5) ; et
exercer la pression (P) sur le bouchon (8) dans la direction de libération (R) afin de forcer le bouchon (8) dans l'espace intermédiaire (H) entre le premier élément d'attache (51) et le second élément d'attache (52), libérant ainsi le premier élément d'attache (51) et le second élément d'attache (52).

2. Procédé selon la revendication 1, dans lequel le procédé comprend une réduction ou une libération de la pression exercée sur le bouchon pour ralentir ou arrêter l'entraînement du bouchon dans le tuyau flexible.

3. Procédé selon la revendication 1 ou 2, dans lequel le procédé comprend une étape consistant à doter le bouchon d'un joint d'étanchéité qui divise le tuyau flexible en une première section en amont et en une seconde section en aval du bouchon par rapport à la direction de libération, dans lequel le joint d'étanchéité empêche la fuite de la pression de la première section à la seconde section.

4. Procédé selon l'une quelconque des revendications précédentes, dans lequel le bouchon est prévu avec une cale qui se rétrécit progressivement vers une attache amovible, dans lequel l'étape pour forcer le bouchon dans ladite une attache amovible comprend une étape consistant à forcer la cale entre le premier élément d'attache et le second élément d'attache dans la direction de libération, calant ainsi ladite une attache amovible ouverte.

5. Procédé selon l'une quelconque des revendications précédentes, dans lequel la pression pour entraîner le bouchon dans le tuyau flexible est de l'ordre de 0,5 à 1 bar et/ou dans lequel la pression pour forcer le bouchon dans la une attache amovible est de l'ordre de 2,0 à 10,0 bar, et de préférence de l'ordre de 2,0 à 8,0 bar.

6. Procédé selon l'une quelconque des revendications précédentes, dans lequel la pression est une pression hydraulique ou une pression pneumatique.

7. Procédé selon l'une quelconque des revendications précédentes, dans lequel le procédé comprend en outre la fourniture d'un renfort ou flotteur sur le tuyau flexible en amont de ladite une attache amovible par rapport à la direction de libération pour empêcher le jeu du tuyau flexible, dans lequel le renfort au flotteur est de préférence agencé pour maintenir le tuyau flexible à un angle compris entre zéro et cinquante degrés par rapport à la direction de libération.

8. Procédé selon l'une quelconque des revendications précédentes, dans lequel le tuyau flexible a une première extrémité où le bouchon est inséré et une seconde extrémité en aval de la première extrémité dans la direction de libération, dans lequel le procédé comprend en outre la fourniture d'un élément de collecte au niveau de ou à proximité de la seconde extrémité du tuyau flexible pour collecter le bouchon, le procédé comprenant de préférence une réduction ou une libération de la pression dans le tuyau flexible en amont du bouchon collecté par rapport à la direction de libération.

9. Procédé selon l'une quelconque des revendications précédentes, dans lequel le procédé comprend en outre la fourniture d'un lubrifiant entre le bouchon et le tuyau flexible afin de faciliter le coulissement dudit bouchon à l'intérieur du tuyau flexible, dans lequel le lubrifiant est de préférence appliqué sur le bouchon avant l'insertion.

10. Système (10) pour libérer une charge submersible (2) d'un élément flottant (3), comprenant en élément flottant (3), une ou plusieurs attaches amovibles (5) pour coupler la charge submersible (2) à l'élément flottant (3) et un tuyau flexible (6) s'étendant à travers les une ou plusieurs attaches amovibles (5), dans lequel chaque attache amovible (5) comprend un premier élément d'attache (51) et un second élément d'attache (52) qui sont agencés pour être mis en prise, de manière amovible, entre eux, autour du tuyau flexible (6) tout en laissant un espace intermédiaire (H) pour loger ledit tuyau flexible (6), dans lequel le système (1) comprend en outre un bouchon (8) qui peut être inséré dans le tuyau flexible (6) dans une direction de libération (R) vers les une ou plusieurs attaches amovibles (5), dans lequel le bouchon (8) est dimensionné pour s'adapter dans le tuyau flexible (5) dans la direction de libération (R), alors que le bouchon (8) est trop grand pour s'adapter dans l'espace intermédiaire (H) entre les éléments d'attache (51, 52) mis en prise, dans lequel le système (1) comprend un source de pression (7), en particulier une source de pression pneumatique ou une source de pression hydraulique, qui peut être raccordée au tuyau flexible (6) au niveau de sa première extrémité (61) en amont du bouchon (8) par rapport à la direction de libération (R), dans lequel la source de pression (7) est agencée pour exercer une pression (P) sur le bouchon (8) dans la direction de libération (R) pour entraîner le bouchon (8) dans le tuyau flexible (6) dans la direction de libération (R) vers et en contact avec l'une des une ou plusieurs attaches amovibles (5) et à travers l'espace intermédiaire (H) entre les éléments d'attache (51, 52) mis en prise de ladite une attache amovible (5), afin de libérer lesdites éléments d'attache (51, 52).

11. Système selon la revendication 10, dans lequel la source de pression comprend un élément de régulation pour réguler la pression de la source de pression.

12. Système selon la revendication 10 ou 11, dans lequel le tuyau flexible a une seconde extrémité en aval de la première extrémité dans la direction de libération, dans lequel le système comprend un élément de collecte pour collecter le bouchon au niveau de ou à proximité de la seconde extrémité, de préférence dans lequel le tuyau flexible est prévu avec une ou plusieurs perforations qui sont agencées pour être en amont du bouchon collecté au niveau de ou à proximité de la seconde extrémité.

13. Système selon l'une quelconque des revendications 10 à 12,
dans lequel le tuyau flexible est prévu avec un élément de renforcement, de préférence une nervure, pour augmenter la rigidité du tuyau flexible contre le desserrage ;
ou bien
dans lequel le tuyau flexible est un tuyau flexible principal, dans lequel le système comprend en outre un tuyau flexible auxiliaire qui est raccordé au tuyau flexible principal et qui est agencé pour fournir la flottabilité et/ou la rigidité au tuyau flexible principal une fois que le tuyau flexible principal est libéré de l'élément flottant.

14. Système selon l'une quelconque des revendications 10 à 13, dans lequel le bouchon a une extrémité d'attaque qui est agencée pour être orientée dans la direction de libération et une extrémité de fuite qui est agencée pour être orientée à l'opposé de la direction de libération, dans lequel le bouchon est trop grand pour s'adapter dans l'espace intermédiaire entre l'élément d'attache au niveau de ou à proximité de l'extrémité d'attaque, dans lequel le bouchon est prévu avec une cale au niveau de l'extrémité d'attaque, dans lequel le bouchon est prévu avec un joint d'étanchéité au niveau de ou à proximité de l'extrémité de fuite du bouchon qui est agencé pour venir étroitement en butée et/ou sceller le tuyau flexible.

15. Système selon l'une quelconque des revendications 10 à 14, dans lequel le bouchon comprend un corps de bouchon, dans lequel le corps de bouchon comprend ou forme une surface de lubrification pour recevoir une quantité de lubrifiant afin de réduire la résistance au coulissement du bouchon par rapport au tuyau flexible, de préférence dans lequel la surface de lubrification est évidée par rapport aux parties adjacentes du bouchon.
